# EUROPEAN PATENT SPECIFICATION

(11) **EP 1 843 050 B1**
(45) Date of publication and mention of the grant of the patent: **12.03.2014**
(21) Application number: 06112189.3
(22) Date of filing: 04.04.2006
(51) Int. Cl.: F16C 1/26

(54) **Sheath terminal for a driving cable**
Endstück einer Hülle für ein Antriebkabel
Borne de gaine d'un câble tracteur

(43) Date of publication of application: 10.10.2007
(73) Proprietor: Fico Triad, S.A., 08028 Barcelona (ES)
(72) Inventor: Prat Terradas, Jaume, ES-08028 Barcelona (ES); Jornet Vidal, Jordi, ES-08028 Barcelona (ES); Doña Contero, Juan Manuel, ES-08028 Barcelona (ES)
(74) Representative: ZBM Patents - Zea, Barlocci & Markvardsen

(56) References cited:
- DE-U1- 29 908 465
- GB-A- 1 161 292
- US-A- 2 954 248
- US-A- 4 185 516
- US-A- 5 579 662
- US-A1- 2003 198 510

## Description

The present invention relates to a sheath terminal assembly comprising a sheath terminal for a driving cable such as, for example, those used in gear boxes, brake systems, etc. The sheath terminal is employed for fixing the cable sheath to a support integral with or attached to a motor vehicle.

### Background of the invention

Sheath terminal assemblies for driving cables intended to be mounted on a support are commonly known in the art. Said support typically has a slot open at one edge thereof such that it is substantially U-shaped near said edge. The terminal comprises a ringed groove that is defined by two radial walls. The groove is intended for receiving said support, in the slot thereof.

One example of such assemblies is described in EP1026411. An anchoring device for anchoring an elongate member to a support provided with a slot leading to one edge thereof is disclosed. This device includes a sleeve for fitting over the member and having a groove slidable along the slot, the groove being formed by two solid, parallel walls. A spring-loaded ring is movable along the sleeve to allow accommodation of the slotted support within the groove and is biased to interlock with a projection formed on the support.

A further approach is described in EP0703395 which relates to a system for immobilising an elongated element onto a wall. The wall has a U-shaped slot which opens out on the side opposite of its base. Said elongated element carries a sleeve designed to be radially introduced into the slot and having a radial shoulder that butts against one face of the wall and a guide section thereon. Resilient means are provided between the elongated element and mobile element placed round the guide section to force the mobile element against the other face of the wall to hold the unit in position.

Still another example is shown in EP1114937 which discloses a unit for restraining the sheath of a flexible cable. It comprises an abutment body coaxial with the elongate element and having a pair of opposed shoulder surfaces which define, on opposite sides, an engagement portion of the abutment body. The unit also comprises a support bracket with a main seat for housing the engagement portion of the abutment body. The bracket has, in the vicinity of the main seat, at least one auxiliary seat for engagement, as a result of a movement of the abutment body relative to the bracket in a plane substantially parallel to the bracket, by snap locking means connected to the abutment body and projecting axially into the space between the two shoulder surfaces.

US2954248 discloses a means for fastening a brake cable assembly to a bracket corresponding to the preamble of claim 1. The cable assembly is fitted by passing it through a slotted hole formed in the vehicle bracket such that, when assembled, the bracket is arranged between a spring and a washer.

None of these documents teaches the specific configuration of a ringed groove in the sheath terminal for receiving the support such that there is provided a tapered flexible flange extending substantially along the length of the circumference for being deformed on insertion of said support and preventing it from coming off the groove.

### Description of the invention

The present invention provides a sheath terminal assembly comprising a sheath terminal for a driving cable intended to be mounted on a support, e. g. a flat plate, having a slot open out at one edge thereof. The terminal comprises a terminal body having a groove defined by radial walls intended for receiving the support, in the slot thereof.

The sheath terminal includes a circumferential, flexible, tapered flange extending substantially along the length of the circumference. This flexible, tapered flange is adapted to be deformed on insertion of the support.

The sheath terminal assembly of the invention allows for an easy assembly without requiring it to be positioned to any direction and without using particular tooling.

The support into which the terminal is to be inserted, has at least one protrusion formed adjacent to the slot. In the assembled position, said at least one protrusion abuts against a peripheral portion of said flange preventing the terminal from being removed from the support. This flexible, tapered flange interact with said at least one protrusion for carrying out this terminal retaining function.

As the terminal is inserted into the support slot, the flexible, tapered flange is deformed by said at least one protrusion of the slot. When full insertion is reached, said flange has been recovered from its temporary deformation and the terminal is now retained in the groove slot, against said at least one protrusion of the support.

Retention is effectively carried out by said at least one protrusion of the support. For this purpose, each protrusion has a sloped portion emerging from one surface of said support, for facilitating insertion of said protrusion through the groove of the terminal. The sloped portion may reach a height of the order of 1 mm from the surface of the support. The sloped portion extends into a generally flat portion and a retaining wall is formed between said surface of the support and the end of said generally flat portion intended for acting as an abutment against removal of the terminal from the slot in the support. In one embodiment, the retaining wall is substantially curved in shape.

The flange may be arranged adjacent one of the radial walls. The orientation of said flange is, according to one embodiment of the invention, such that the tapered configuration of said flange has a slope in which the large diameter portion is nearer the other of said radial walls defining the groove than the small diameter portion. This configuration allows for the locking of the terminal in the support when in the assembled position.

In some embodiments, the terminal includes a radial ridge adjacent the small diameter portion of said circumferential flexible, tapered flange. This radial ridge serves the purpose of protecting the flange from being damaged by other parts in the vehicle.

It may be provided that the flange is formed integral with a sleeve fitted on the terminal. The other wall defining the groove may be formed integral with the terminal body.

The circumferential flexible, tapered flange may be made from any suitable material such that it may be resiliently deformed on insertion into the support slot. A suitable material for this purpose may be polyamide but of course other suitable materials may be used. Embodiments of the invention include the use of a metal tapered flange in which case said flange has a plurality of radially extending openings. In any case, depending on the material from which the tapered flange is made, the thickness thereof will range from 0,15 to 3,0 mm. Even though thicknesses ranging from 0,5 to 1,5 mm could be the most preferred, thicknesses of the order of 3,0 mm may be achieved by using a more flexible material comprising thermoplastic and elastomer. In the case of polyamide, the circumferential flexible, tapered flange may be 1 mm thick, sufficient for having enough flexibility for facilitating assembly and enough strength for obtaining a proper assembly retention.

In some embodiments, at least one of said radial walls or the flange is movable relative to the terminal body so that the spacing in the groove may be varied for disassembling purposes. The movement of at least one of said radial walls or the flange thus allows the terminal to be disassembled from the support. In these embodiments, the circumferential flange may further comprise an abutting portion which may be straight in shape or having a reversed tapered configuration.

The movement of said at least one of said radial walls or the flange may be carried out by providing the terminal body with a retention toothing. This retention toothing cooperates with a corresponding retention toothing formed on the terminal. Therefore, at least one of said radial walls or the flange may be displaced relative to the other radial wall as it is rotated so that the terminal cab be easily disassembled from the support.

### Brief description of the drawings

A particular embodiment of a sheath terminal assembly for a driving cable of the present invention will be described in the following, only by way of non-limiting example, with reference to the appended drawings, in which:
Fig. 1 is a perspective view of one embodiment of a sheath terminal and support assembly according to the invention in which the terminal is shown disassembled from the support; the sheath terminal has been fully depicted, that is, with a guide tube, a sheath, a rod, and the driving cable;
Fig. 2 is a elevational view of the embodiment of the sheath terminal and support assembly shown in Fig. 1, that is, with the terminal disassembled from the support;
Fig. 3 is a perspective view of the embodiment of the sheath terminal and support assembly shown in Fig. 1 in which the terminal is fully assembled in the support;
Figs. 4 and 5 are perspective views showing two different embodiments of a circumferential, flexible, tapered flange suitable to be used in the sheath terminal of the invention;
Figs. 6a-6d are an elevational sectional views showing different embodiments of one of such flexible, tapered flanges;
Figs. 7 and 8 are elevational views of the sheath terminal in which one radial wall is movable; Fig. 7 depicts the terminal with the radial wall in one unlocking position (moved to the right in the figure), and Fig. 8 depicts the terminal with the radial wall in one closed, locked position (moved to the left in the figure);
Fig. 9 is an elevational sectional view of the of the embodiment of the sheath terminal shown in Fig. 1;
Fig. 9a is an elevational sectional view of the of the embodiment of the sheath terminal in the case one of the radial walls is movable relative to the other radial wall, the sheath terminal being shown in a closed position, that is, with both radial walls substantially close to each other;
Fig. 9b is an elevational sectional view of the of the embodiment of the sheath terminal in the case one of the radial walls is movable relative to the other radial wall, the sheath terminal being shown in a open position, that is, with the movable radial wall moved away from the other radial wall; and
Fig. 10 is a perspective view of the support.

### Description of embodiments

According to the figures, the sheath terminal assembly according to the invention comprises a sheath terminal which has been generally indicated at 1. The sheath terminal 1 comprises a guide tube 1 a, a rod 9 fitted inside said guide tube 1 a, and a sheath 13. A driving cable 14 runs inside the sheath 13 for operating, for example, a gear box in a motor vehicle (not shown).

The sheath terminal 1 is retained in axial position as well as the assembly comprising the guide tube 1 a, the rod 9, the sheath 13, as the cable 14 is moved. For this purpose, the cable sheath 1a is fixed relative to the motor vehicle by means of a support 2 that is part of said motor vehicle.

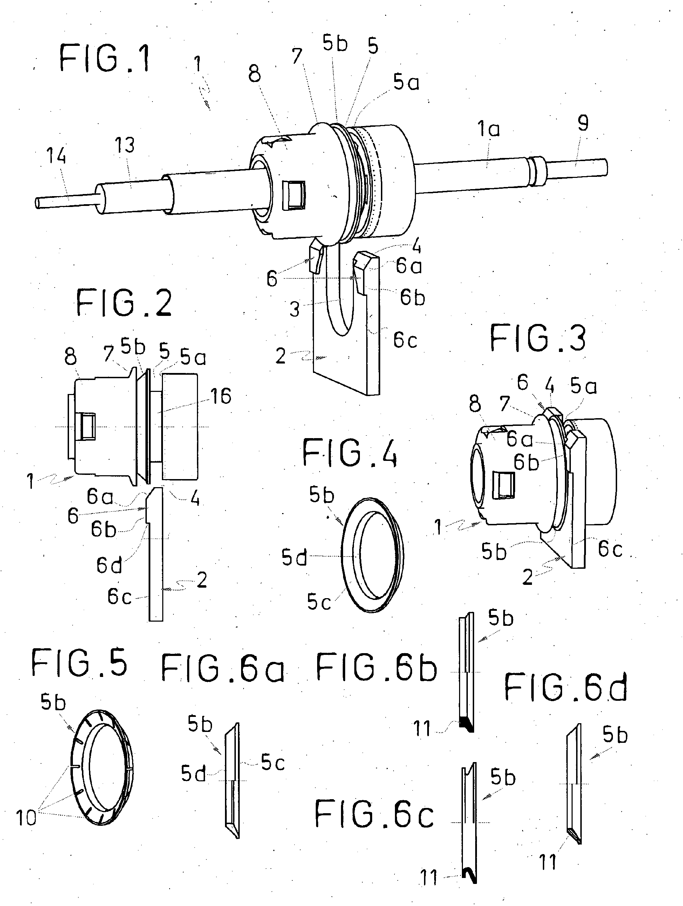

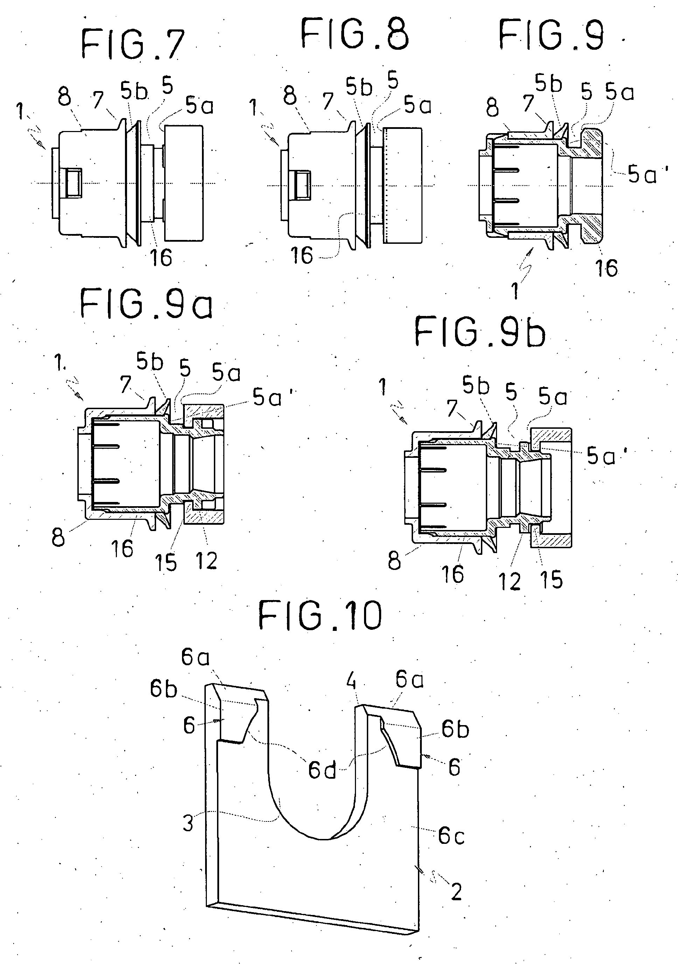

In the embodiment shown in the figures, the support 2 is in the form of a flat plate in which a slot 3 open out at its upper edge 4 is formed defining a U-shaped plate as shown in the disassembled position of the terminal assembly depicted in the figure 1 as well as in the perspective view of figure 10.

The sheath terminal 1 comprises a terminal body having a ringed groove 5 that is defined by radial walls 5a, 5a'. The ringed groove 5 receives the support 2 through its slot 3.

The sheath terminal 1 further includes a circumferential, flexible, tapered flange 5b extending substantially along the length of the circumference. The flexible, tapered flange 5b is adapted to be deformed on insertion of the support.

The flange 5b may be made from any suitable flexible material such that it can be resiliently deformed on insertion into the support slot 3, for example polyamide, having a thickness of about 1 mm. Other materials may of course be used according to the resilient properties desired for the flange 5b.

When the terminal 1 has been already assembled in the support 2, that is, when the terminal 1 is inserted into the slot 3 of the support 2, it is prevented from being released therefrom due to protrusions 6 formed in the support 2 as explained below.

Referring to figure 3, two protrusions are formed adjacent to the slot 3, at the upper edge 4 of the support plate 2. Protrusions have been generally indicated at 6. They each has a sloped portion 6a emerging from and inclined relative to one surface 6c of the support 2. Such sloped portion 6a extends into a generally flat transition portion 6b that is substantially parallel to the surface 6c of the support 2. A retaining wall 6d extends from said surface 6c of the support 2 to the end of said generally flat portion 6b. In the embodiment shown in the figure 3, the retaining wall 6d in the support 2 is substantially curved in shape for adapting to the flange 5b.

The sloped portion 6a facilitates the insertion of the protrusions 6 into the groove 5 of the body terminal 16. The flange 5b of the sheath terminal 1 is deformed by said sloped portion 6a as the support 2 is inserted into the groove 5.

When in the assembled position, the flexible flange 5b recovers from deformation and becomes retained into the groove slot 3, against the retaining walls 6d of the protrusions 6. In this assembled position, the retaining wall 6d acts as an abutment against removal of the terminal 1 from the slot 3 in the support 2, abutting against a peripheral portion of the flange 5b preventing the terminal 1 from being removed from the support 2.

As shown in figure 6a, the slope of the flange 5b has a large diameter portion 5c and a small diameter portion 5d. Flange 5b is arranged adjacent one of the radial walls 5a', as it may be seen from figures 9, 9a and 9b. The arrangement of the flange 5b in the sheath terminal 1 is such that the large diameter portion 5c is nearer the other radial wall 5a defining the groove 5 than the small diameter portion 5d. This specific orientation of the flange 5b allows for the locking of the sheath terminal 1 in the support 2 when in the assembled position (fig. 3).

In the embodiment shown in the figures, the sheath terminal 1 includes a radial ridge 7 adjacent the small diameter portion 5d of the tapered flange 5b. The radial ridge 7 protects the flange 5b from being damaged by other parts in the vehicle.

Both walls 5a, 5a' defining the groove 5 may be part of the terminal body 16 of the sheath terminal 1. However, the flange 5b could be formed integral with a sleeve 8 fitted on the terminal 1. The opposite radial wall 5a defining the groove 5 may be formed integral with the terminal body 16.

A plurality of radially extending openings 10 may be formed in the flange 5b of the terminal 1 for providing it with a greater flexibility in the case of using harder materials, e.g. metal. Such a specific embodiment is shown in figure 5.

There is provided that the spacing between walls 5a, 5a' and flange 5b defining the groove 5 can be varied for easily releasing the sheath terminal 1 from the support 2.

As shown in the various embodiments in figures 6b, 6c, 6d, the tapered flange 5b may further comprise an abutting portion 11 extending from the tapered portion. The abutting portion 11 may take on any suitable shape according to the requirements, such as shown in said figures 6b, 6c, 6d, for example straight (fig. 6b), with a reversed tapered configuration (fig. 6c) or simply tapered (fig. 6d).

For easily releasing the terminal sheath 1 from the support 2, at least one of said radial walls 5a, 5a' or the flange 5b is movable relative to the terminal body 16. In the embodiment shown, the radial wall 5a can be moved relative to the flange 5b, the latter being fixed relative to the sleeve 8. Displacement of the radial wall 5a is carried out as it is rotated. For this purpose, the terminal body 16 has a retention toothing 12 cooperating with a corresponding retention toothing 15 formed on the terminal 1, as shown in figures 9a and 9b. Therefore, the movable radial wall 5a is displaced relative to the other flange 5b as the radial wall 5a is rotated.

Modifications considered as convenient may be introduced in the sheath terminal assembly described herein provided that the essence of the invention that is summarized in the following claims is not altered.

## Claims

1. Sheath terminal assembly, the assembly including a sheath terminal (1) and a support for a driving cable intended to be mounted on a support (2), said support (2) having a slot (3) open out at one edge (4) thereof, said terminal comprising a terminal body (16) having a groove (5) defined by radial walls (5a, 5a') intended for receiving said support (2), in the slot (3) thereof, and a circumferential, flexible, tapered flange (5b) extending substantially along the length of the circumference adapted to be deformed on insertion of said support (2), **characterized in that** said support (2) has at least one protrusion (6) formed adjacent to said slot (3), in such a way that, in one assembled position, said at least one protrusion (6) abuts against a peripheral portion of said flange (5b) preventing the terminal (1) from being removed from the support (2).

2. Sheath terminal assembly as claimed in claim 1, **characterized in that** said at least one protrusion (6) of the support (2) has a sloped portion (6a) emerging from one surface (6c) of said support (2), for facilitating insertion of said protrusion (6) through the groove (5) of the terminal (1), said sloped portion (6a) extending into a generally flat portion (6b) and a retaining wall (6d) being formed between said surface (6c) of the support (2) and the end of said generally flat portion (6b) intended for acting as an abutment against removal of the terminal (1) from the slot (3) in the support (2).

3. Sheath terminal assembly as claimed in claim 2, **characterized in that** said retaining wall (6d) is substantially curved in shape.

4. Sheath terminal assembly as claimed in claim 1, **characterized in that** the flange is adjacent one of the radial walls (5a, 5a'), the tapered configuration of said flange (5b) having a slope such that the large diameter portion (5c) is nearer the other of said radial walls (5a, 5a') defining the groove (5) than the small diameter portion (5d).

5. Sheath terminal assembly as claimed in claim 1, **characterized in that** it includes a radial ridge (7) adjacent the small diameter portion (5d) of said flange (5b).

6. Sheath terminal assembly as claimed in any of the preceding claims, **characterized in that** said flange (5b) is formed integral with a sleeve (8) fitted on the terminal (1).

7. Sheath terminal assembly as claimed in any of the preceding claims, **characterized in that** the other radial wall (5a, 5a') defining said groove (5) is formed integral with said terminal body (16).

8. Sheath terminal assembly as claimed in any of the preceding claims, **characterized in that** said flange (5b) is 0,15-3,0 mm thick.

9. Sheath terminal assembly as claimed in claim 7, **characterized in that** said flange (5b) is 0,5-1,5 mm thick.

10. Sheath terminal assembly as claimed in any of the preceding claims, **characterized in that** said flange (5b) has a plurality of radially extending openings (10).

11. Sheath terminal assembly as claimed in any of the preceding claims, **characterized in that** the flange (5b) further comprises an abutting portion (11).

12. Sheath terminal assembly as claimed in any of the preceding claims, **characterized in that** at least one of the radial walls (5a, 5a') or the flange (5b) is movable relative to the terminal body (16).

13. Sheath terminal assembly as claimed in any of the preceding claims, **characterized in that** said terminal body (16) has a retention toothing (12) cooperating with a corresponding retention toothing (15) formed on the terminal (1).

## Patentansprüche

1. Endstückanordnung einer Hülle, wobei die Anordnung ein Endstück (1) einer Hülle und einen Träger für ein Antriebkabel umfasst, das zur Montage auf einen Halter (2) vorgesehen ist, wobei der Halter (2) eine Nut (3) hat, die an einem Rand (4) geöffnet ist, wobei das Endstück einen Endkörper (16) umfasst, der einen Schlitz (5) hat, der durch radiale Wände (5a, 5a') definiert ist, die zum Empfangen des Halters (2) in dessen Schlitz (3) vorgesehen sind, und einen umlaufend, flexiblen, abgeschrägten Flansch (5b) umfasst, der sich im Wesentlichen entlang der Kreislinie erstreckt, die angepasst ist, um umgeformt zu werden, wenn der Halter (2) eingeführt wird, **dadurch gekennzeichnet, dass** der Halter (2) mindestens einen Vorsprung (6) hat, der angrenzend an den Schlitz (3) gebildet ist, so dass, in einer Einbaulage, der mindestens ein Vorsprung (6) an einen peripheren Teil des Flansches (5b) anstößt, wodurch es verhindert wird, dass das Endstück (1) aus dem Halter (2) entfernt wird.

2. Endstückanordnung einer Hülle nach Anspruch 1, **dadurch gekennzeichnet, dass** der mindestens ein Vorsprung (6) des Halters (2) einen abgeböschten Teil (6a) hat, der aus einer Oberfläche (6c) des Halters (2) herausragt, um das Einführen des Vorsprungs (6) durch den Schlitz (5) des Endstücks (1) zu ermöglichen, wobei der abgeböschte Teil (6a) sich in einen im Allgemeinen flachen Teil (6b) erstreckt und eine Stützwand (6d) zwischen der Oberfläche (6c) des Halters (2) und dem Ende des im Allgemeinen flachen Teils (6b) gebildet ist, die als Anlagefläche vorgesehen ist, um das Entfernen des Endstücks (1) aus dem Schlitz (3) im Halter (2) zu vermeiden.

3. Endstückanordnung einer Hülle nach Anspruch 2, **dadurch gekennzeichnet, dass** die Stützwand (6d) im Wesentlichen kurvenförmig ist.

4. Endstückanordnung einer Hülle nach Anspruch 1, **dadurch gekennzeichnet, dass** der Flansch angrenzend an eine der radialen Wände (5a, 5a') ist, wobei die abgeschrägte Konfiguration des Flansches (5b) eine Neigung hat, so dass der Teil (5c) mit einem größeren Durchmesser näher zur anderen der radialen Wände (5a, 5a'), die den Schlitz (5) bildet, ist als der Teil (5d) mit dem geringeren Durchmesser.

5. Endstückanordnung einer Hülle nach Anspruch 1, **dadurch gekennzeichnet, dass** sie eine radiale Kante (7) umfasst, die angrenzend an den Teil (5d) des Flansches (5b) ist, der einen geringeren Durchmesser hat.

6. Endstückanordnung einer Hülle nach einem der vorhergehenden Ansprüche, **dadurch gekennzeichnet, dass** der Flansch (5b) als integriertes Bauteil zusammen mit einer Hülse (8) gebildet ist, die auf dem Endstück (1) montiert ist.

7. Endstückanordnung einer Hülle nach einem der vorhergehenden Ansprüche, **dadurch gekennzeichnet, dass** die andere radiale Wand (5a, 5a'), die den Schlitz (5) bildet, als integriertes Bauteil zusammen mit dem Endkörper (16) gebildet ist.

8. Endstückanordnung einer Hülle nach einem der vorhergehenden Ansprüche, **dadurch gekennzeichnet, dass** der Flansch (5b) 0,15-3,0 mm dick ist.

9. Endstückanordnung einer Hülle nach Anspruch 7, **dadurch gekennzeichnet, dass** der Flansch (5b) 0,5-1,5 mm dick ist.

10. Endstückanordnung einer Hülle nach einem der vorhergehenden Ansprüche, **dadurch gekennzeichnet, dass** der Flansch (5b) eine Mehrzahl von radial erstreckenden Öffnungen (10) hat.

11. Endstückanordnung einer Hülle nach einem der vorhergehenden Ansprüche, **dadurch gekennzeichnet, dass** der Flansch (5b) weiterhin einen anstoßenden Teil (11) umfasst.

12. Endstückanordnung einer Hülle nach einem der vorhergehenden Ansprüche, **dadurch gekennzeichnet, dass** mindestens eine der radialen Wände (5a, 5a') des Flansches (5b) mobil bezüglich des Endkörpers (16) ist.

13. Endstückanordnung einer Hülle nach einem der vorhergehenden Ansprüche, **dadurch gekennzeichnet, dass** der Endkörper (16) eine Stützverzahnung (12) hat, die mit einer am Endteil (1) gebildeten entsprechenden Stützverzahnung (15) zusammenwirkt.

## Revendications

1. Assemblage de borne de gaine, l'assemblage incluant une borne (1) de gaine et un support pour un câble tracteur destiné à être monté sur un support (2), ayant ledit support (2) une encoche (3) ouverte dans un bord (4) de celui-ci, comprenant ladite borne un corps (16) de borne ayant une rainure (5) définie par des parois radiales (5a, 5a') destinée à recevoir ledit support (2) dans ladite encoche (3) de celui-ci, et un flanc (5b) chanfreiné, flexible et circonférentiel s'étendant essentiellement le long de la circonférence et étant adapté de façon à être déformé lorsque ledit support (2) est inséré, **caractérisé en ce que** ledit support (2) a au moins une saillie (6) formée en position adjacente à ladite encoche (3) d'une manière telle que, dans une position assemblée, ladite au moins une saillie (6) est contigüe à une partie périphérique dudit flanc (5b), empêchant le détachement de la borne (1) par rapport au support (2)

2. Assemblage de borne de gaine selon la revendication 1, **caractérisé en ce que** ladite au moins une saillie (6) du support (2) a une partie inclinée (6a) émergeant par rapport à une surface (6c) dudit support (2) pour faciliter l'insertion de la dite saillie (6) à travers la rainure (5) de la borne (1), s'étendant ladite partie inclinée (6a) dans l'intérieur d'une partie (6b) généralement plate et étant formée entre ladite surface (6c) du support (2) et le bout de la dite partie (6b) généralement plate une paroi (6d) de rétention destinée à agir en tant que soutien pour empêcher le détachement de la borne (1) par rapport à l'encoche (3) dans le support (2).

3. Assemblage de borne de gaine selon la revendication 2, **caractérisé en ce que** ladite paroi (6d) de rétention a une forme essentiellement courbe.

4. Assemblage de borne de gaine selon la revendication 1, **caractérisé en ce que** le flanc est adjacent à l'une des parois radiales (5a, 5a'), ayant la configuration chanfreinée dudit flanc (5b) une inclinaison telle que la partie (5c) ayant un diamètre supérieur est plus proche de l'autre desdites parois (5a, 5a') radiales définissant la rainure (5) que la partie (5d) ayant un diamètre inférieur.

5. Assemblage de borne de gaine selon la revendication 1, **caractérisé en ce qu'**il inclut une arête radiale (7) adjacente à la partie (5d) dudit flanc (5b) ayant un diamètre inférieur.

6. Assemblage de borne de gaine selon l'une quelconque des revendications précédentes, **caractérisé en ce que** ledit flanc (5b) est formé intégralement avec une douille (8) montée sur le terminal (1).

7. Assemblage de borne de gaine selon l'une quelconque des revendications précédentes, **caractérisé en ce que** l'autre paroi radiale (5a, 5a') définissant ladite rainure (5) est formée intégralement avec ledit corps terminal (16).

8. Assemblage de borne de gaine selon l'une quelconque des revendications précédentes, **caractérisé en ce que** ledit flanc (5b) a une épaisseur de 0,15 - 3,0 mm.

9. Assemblage de borne de gaine selon la revendication 7, **caractérisé en ce que** ledit flanc (5b) a une épaisseur de 0,5 - 1,5 mm.

10. Assemblage de borne de gaine selon l'une quelconque des revendications précédentes, **caractérisé en ce que** ledit flanc (5b) a une pluralité d'ouvertures (10) qui s'étendent radialement.

11. Assemblage de borne de gaine selon l'une quelconque des revendications précédentes, **caractérisé en ce que** le flanc (5b) comprend en outre une partie (11) de saillie.

12. Assemblage de borne de gaine selon l'une quelconque des revendications précédentes, **caractérisé en ce que** l'au moins une paroi radiale (5a, 5a') ou le flanc (5b) est mobile par rapport au corps terminal (16).

13. Assemblage de borne de gaine selon l'une quelconque des revendications précédentes, **caractérisé en ce que** ledit corps terminal (16) a une denture (12) de rétention coopérant avec une denture (15) de rétention correspondant formée sur le terminal (1).
